# EUROPÄISCHE PATENTSCHRIFT

(11) **EP 2 263 211 B1**
(45) Veröffentlichungstag und Bekanntmachung des Hinweises auf die Patenterteilung: **31.08.2011**
(21) Anmeldenummer: 09727213.2
(22) Anmeldetag: 26.03.2009
(51) Int. Cl.: G06T 7/00

(54) **VERFAHREN UND VORRICHTUNG ZUR SEGMENTATION EINER LÄSION**
METHOD AND DEVICE FOR THE SEGMENTATION OF A LESION
PROCÉDÉ ET DISPOSITIF POUR LA SEGMENTATION D'UNE LÉSION

(30) Priorität: 02.04.2008 DE 102008016807
(43) Veröffentlichungstag der Anmeldung: 22.12.2010
(73) Patentinhaber: Fraunhofer-Gesellschaft zur Förderung der angewandten Forschung e.V., 80686 München (DE)
(72) Erfinder: ELTER, Matthias, 91054 Erlangen (DE); BERGEN, Tobias, 91045 Erlangen (DE)
(74) Vertreter: Rau, Schneck & Hübner
(86) Internationale Anmeldenummer: PCT/EP2009/002198
(87) Internationale Veröffentlichungsnummer: WO 2009/121510

(56) Entgegenhaltungen:
- WO-A-2007/119204
- US-A- 5 832 103
- MATAS J ET AL: "Robust wide baseline stereo from maximally stable extremal regions" PROCEEDINGS OF THE BRITISH MACHINE VISION CONFERENCE, XX, XX, 1. Januar 2002 (2002-01-01), Seiten 384-393, XP002390328 in der Anmeldung erwähnt
- ANDY TSAI ET AL: "A Shape-Based Approach to the Segmentation of Medical Imagery Using Level Sets" IEEE TRANSACTIONS ON MEDICAL IMAGING, IEEE SERVICE CENTER, PISCATAWAY, NJ, US, Bd. 22, Nr. 2, 1. Februar 2003 (2003-02-01), XP011076429 ISSN: 0278-0062

## Beschreibung

Die Erfindung betrifft ein Verfahren und eine Vorrichtung zur Segmentation einer Läsion.

Brustkrebs ist die häufigste Krebserkrankung der Frau in der westlichen Welt. Die frühzeitige Erkennung dieser Erkrankung verbessert die Überlebenschancen der betroffenen Frauen beträchtlich. Die digitale Röntgenmammographie ist die effektivste Technik zur Erkennung von Brustkrebstumoren in frühen Stadien. Eine wichtige Gruppe von Brustläsionen, die in digitalen Mammographie-Bildern zu finden sind, sind die so genannten Herdbefunde. Herdbefunde sind lokale Verdichtungen, die in mindestens zwei Röntgenprojektionen sichtbar sind und üblicherweise auf Basis ihrer Größe, Form und Art der Außenkontur charakterisiert werden. Während es sich bei Herdbefunden mit spekulierter, unscharfer oder mikrolobulierter Außenkontur mit hoher Wahrscheinlichkeit um bösartige Tumore handelt, sind runde oder ovale Herdbefunde mit scharfer Außenkontur in der Regel gutartige Tumore, wie beispielsweise Fibroadenome, Lymphknoten oder Zysten.

Die Unterscheidung von gut- und bösartigen Herdbefunden anhand ihrer Erscheinung in einem Mammographie-Bild gestaltet sich in der Praxis als schwierig, da es sich bei einem Mammographie-Bild um eine zweidimensionale Durchlichtaufnahme der dreidimensionalen Brust handelt, wodurch es zu optischen Überlagerungen mit Brustgewebe in dem Mammographie-Bild kommt. Optische Überlagerungen von gutartigen Herdbefunden mit Brustgewebe lassen sich in Mammographie-Bildern oftmals schwer von bösartigen Herdbefunden unterscheiden. Durch optische Überlagerungen können somit gutartige Tumore optische Charakteristika von bösartigen Tumoren annehmen und umgekehrt.

Der Radiologe entscheidet auf der Basis von Mammographie-Bildern über das weitere medizinische Vorgehen. Falls es sich bei einer Läsion möglicherweise um einen bösartigen Tumor handelt, wird dies durch eine so genannte Brustbiopsie überprüft. Handelt es sich hingegen bei der Läsion mit hoher Wahrscheinlichkeit um einen gutartigen Tumor, wird meist im Abstand von einigen Monaten eine Kontrolluntersuchung durchgeführt. Da eine Brustbiopsie mit erheblichen Belastungen für die betroffene Patientin verbunden ist und darüber hinaus erhebliche Kosten verursacht, wird eine sichere Unterscheidung von gut- und bösartigen Tumoren angestrebt, um die Zahl unnötiger Brustbiopsien zu reduzieren.

Zur Reduzierung von unnötigen Brustbiopsien werden Assistenzsysteme eingesetzt, die eine Entscheidungshilfe bereitstellen und somit eine zuverlässigere Unterscheidung zwischen gut- und bösartigen Läsionen ermöglichen sollen. Bei derartigen Assistenzsystemen ist ein wesentlicher Schritt für die Erstellung der Entscheidungshilfe die Trennung der Läsion, beispielsweise des Herdbefundes, von dem Bildhintergrund des Mammographie-Bildes. Diese Trennung wird als Segmentation oder Segmentierung bezeichnet. Die Segmentation bildet die Grundlage für die Bestimmung von Merkmalen, die die Form und die Außenkontur der Läsion beschreiben. Bekannte Verfahren zur Segmentation ermöglichen prinzipiell das Trennen der Läsion von dem Bildhintergrund, jedoch ist die Trennung aufgrund von optischen Überlagerungen, geringem Kontrast oder hohem Bildrauschen oftmals zu ungenau, sodass keine sichere Entscheidungshilfe durch das Assistenzsystem bereitgestellt werden kann.

Aus der US 5 832 103 ist ein Verfahren zur Segmentation einer Läsion in Mammographie-Bildern bekannt, bei dem ein Zentrum der Läsion bestimmt wird, das als Ausgangspunkt für ein Bereichswachstumsverfahren dient. Die für verschiedene Graustufen ermittelten Bereiche werden hinsichtlich ihrer Größe, Kreisförmigkeit und Randunregelmäßigkeiten ausgewertet. Anschließend wird ein sogenannter "transition point" bestimmt, der die Grenze zwischen der Läsion und dem Bildhintergrund charakterisiert. Die Kontur der Läsion ergibt sich aus dem Bereich vor dem "transition point". Nachteilig bei diesem Verfahren ist, dass die Bereiche mittels des Schwellwertverfahrens in Abhängigkeit ihrer Graustufen ermittelt werden, sodass optische Überlagerungen, ein geringer Kontrast oder hohes Bildrauschen die zu bestimmenden Bereiche verfälschen.

Aus der WO 2007/119 204 A2 ist ein Verfahren zur Segmentation einer Läsion bekannt, bei dem ausgehend von einem lokalen Intensitätsmaximum im Mammographie-Bild ein Bereich ausgewählt wird, in dem sich die Läsion befindet. In diesem Bereich werden die Bildpixel mit einem Schwellwert verglichen und so der Läsion oder dem Bildhintergrund zugeordnet. Das derart erhaltene Bild wird mittels eines sogenannten internen bzw. externen Bereichswachstumsverfahrens nachbearbeitet. Das Ergebnis ist die segmentierte Läsion. Dieser Vorgang wird für alle relevanten lokalen Intensitätsmaxima in dem Mammographie-Bild wiederholt, sodass sämtliche Läsionen erfasst werden. Das Segmentationsergebnis dient als Grundlage für den nachfolgenden Schritt der Merkmalsextraktion, wobei diese sowohl an den segmentierten Läsionen als auch an Unterregionen von diesen durchgeführt wird. Auch bei diesem Verfahren beeinträchtigen optische Überlagerungen, ein geringer Kontrast oder hohes Bildrauschen das Ergebnis der Segmentation.

Der Erfindung liegt daher die Aufgabe zugrunde, ein zuverlässiges und robustes Verfahren zur Segmentation von Läsionen zu schaffen.

Diese Aufgabe wird erfindungsgemäß durch ein Verfahren mit den Merkmalen des Anspruchs 1 gelöst. Erfindungsgemäß wurde erkannt, dass die Zuverlässigkeit und Robustheit der Segmentation verbessert werden kann, wenn ausgehend von einer Startregion eine Menge von Kandidatenregionen für die Läsion bestimmt wird. Die Kandidatenregionen sind im Wesentlichen konzentrisch zu der Startregion angeordnet. Die Kandidatenregionen haben zugehörige Kandidatenregion-Außenkonturen, die sich sowohl untereinander nicht schneiden als auch die Startregion-Außenkontur nicht schneiden. Benachbarte Kandidatenregionen bilden somit jeweils zueinander eine innere Kandidatenregion und einen äußere Kandidatenregion, wobei die Kandidatenregion-Außenkontur jeder äußeren Kandidatenregion die Kandidatenregion-Außenkontur der zugehörigen inneren Kandidatenregion einschließt. Weiterhin schließt die Kandidatenregion-Außenkontur jeder Kandidatenregion die Startregion-Außenkontur ein. Da es sich bei Läsionen, insbesondere bei Herdbefunden, um verdichtetes Brustgewebe handelt und die Dichte ausgehend von einem Zentrum des verdichteten Brustgewebes nach außen hin abnimmt, wird bei dem Bestimmen der Kandidatenregionen eine typische Eigenschaft von mammographischen Läsionen, insbesondere von Herdbefunden, ausgenutzt. Das Bestimmen von mehreren Kandidatenregionen liefert somit mehrere mögliche den Kandidatenregion-Außenkonturen entsprechende Außenkonturen für die Läsion. Aus der Menge von Kandidatenregionen kann eine wahrscheinlichste Kandidatenregion gezielt ausgewählt werden, deren Kandidatenregion-Außenkontur der Außenkontur der Läsion am nächsten kommt. Dadurch, dass mehrere Kandidatenregionen zur Auswahl stehen, stehen mehr Informationen zur Verfügung, die eine gezieltere Auswahl der nächstkommenden Kandidatenregion ermöglichen. Darüber hinaus wird durch die Menge von Kandidatenregionen eine Interaktionsmöglichkeit bereitgestellt, mittels der eine unzutreffende automatische Auswahl der nächstkommenden Kandidatenregion durch eine manuelle Auswahl korrigierbar ist. Das erfindungsgemäße Verfahren ermöglicht somit eine zuverlässige und robuste Trennung von Läsionen, insbesondere von Herdbefunden, von dem Bildhintergrund des aufgenommenen Bildes. Für die nachfolgende Erstellung einer Entscheidungshilfe in einem Assistenzsystem wird somit eine sichere Grundlage bereitgestellt.

Zur Erstellung der Entscheidungshilfe werden relevante Merkmale der ausgewählten Kandidatenregion extrahiert. Beispielsweise können Formmerkmale der Kandidatenregion-Außenkontur, Texturmerkmale und/oder die Gewebedichte beschreibende Merkmale der Läsion ermittelt werden. Die Merkmalsextraktion erfolgt vorzugsweise ausschließlich anhand der ausgewählten, also der der Läsion nächstkommenden, Kandidatenregion. Nach der Merkmalsextraktion wird die Läsion klassifiziert, wobei hierzu alle oder eine Untennenge der extrahierten Merkmale verwendet werden können. Die Klassifikation kann beispielsweise in die Klassen "gutartig" oder "bösartig" erfolgen.

Das Levelset-Verfahren ermöglicht eine zuverlässige Bestimmung von geeigneten Kandidatenregionen. Bei dem Levelset-Verfahren wird aus Bildinformationen des ausgewählten Bildbereichs eine dreidimensionale Hilfsfunktion definiert. Die Hilfsfunktion wird zur Bestimmung einer Kandidatenregion mit einer Ebene geschnitten, wobei die Menge der Schnittpunkte die Kandidatenregion-Außenkontur darstellt. Zur Bestimmung mehrerer Kandidatenregionen wird die dreidimensionale Hilfsfunktion in unterschiedlichen Höhenlagen mit der Ebene geschnitten. Das Levelset-Verfahren ist detailliert in dem Buch von J. A. Sethian "Level Set Methods and Fast Marching Methods" (Cambridge University Press, New York, Juni 1999) beschrieben. Auf dieses Buch wird ausdrücklich Bezug genommen. Vorzugsweise wird aus der Vielzahl von Kandidatenregionen, die sich durch das Schneiden in unterschiedlichen Höhenlagen ergeben, eine geeignete Menge von Kandidatenregionen ausgewählt. Die Auswahl erfolgt nach dem Verfahren der maximal stabilen Regionen. Um die Menge der maximal stabilen Kandidatenregionen zu bestimmen, wird innerhalb des Levelset-Verfahrens jedem Zeitpunkt die Größe der zu diesem Zeitpunkt aktuelle Region zugeordnet, woraus sich eine Größenfunktion ergibt. Wann immer die erste Ableitung dieser Größenfunktion ein lokales Minimum aufweist, gilt die zugehörige Region als maximal stabil und wird der Menge der Kandidatenregionen zugeordnet. Eine Glättung der Größenfunktion vor der Bestimmung von lokalen Minima erhöht die Robustheit. Das Verfahren der maximal stabilen Regionen ist detailliert in dem Artikel von J. Mathas et al. "Robust Wide Baseline Stereo from Maximally Stable Extremal Regions" (Proceedings of the British Machine Vision Conference, Band 1, Seiten 384 bis 393, London, 2002) beschrieben. Auf diesen Artikel wird ausdrücklich Bezug genommen. Die Größenfunktion ermöglicht eine sichere Auswahl von geeigneten Kandidatenregionen aus der Vielzahl von Regionen, die das Levelset-Verfahren bereitstellt. Dadurch, dass eine Region der Menge der Kandidatenregionen nur zugeordnet wird, wenn die erste Ableitung der Größenfunktion ein lokales Minimum aufweist, werden nur maximal stabile Regionen zu Kandidatenregionen.

Im Unterschied zu der WO 2007/119 204 A2 werden bei dem erfindungsgemäßen Segmentationsverfahren ausgehend von einer Startregion mehrere Kandidatenregionen für die Läsion bestimmt. Aus diesen Kandidatenregionen wird die der Läsion nächstkommende Kandidatenregion ausgewählt.

Diese stellt das Ergebnis des Segmentationsverfahrens dar. Bei dem Segmentationsverfahren gemäß der WO 2007/119 204 A2 wird lediglich eine Region bestimmt. Bei der nachfolgenden Merkmalsextraktion werden ausgehend von diesem Segmentationsergebnis weitere Unterregionen bestimmt und ausgewertet.

Ein Aufbereiten des Bildbereichs nach Anspruch 2 vereinfacht das Bestimmen der Startregion, da der Bildbereich durch das Tiefpassfiltern geglättet wird. Als Tiefpassfilter kann ein Gauß- oder Mittelwert-Filter verwendet werden. Vorzugsweise wird ein kantenerhaltender Tiefpassfilter, wie beispielsweise ein anisotroper Diffusionsfilter, ein lokaladaptiver Tiefpassfilter oder ein Kuwahara-Filter, eingesetzt werden.

Ein Aufbereiten des Bildbereichs nach Anspruch 3 vereinfacht das Bestimmen der Startregion. Vorzugsweise findet die Quantisierungsstufen-Reduktion nach dem Tiefpassfiltern statt. Die gewünschte reduzierte Anzahl von Quantisierungsstufen kann entweder fest vorgegeben sein oder adaptiv an den Bildinhalt des Bildbereichs angepasst werden.

Eine Startregion nach Anspruch 4 ist einfach zu bestimmen. Eine Startregion, die eine vordefinierte Mindestgröße überschreitet, ermöglicht eine sichere Auswahl von einer geeigneten Startregion, wenn mehrere Startregionen zur Auswahl stehen. Eine Startregion, die die hellste Quantisierungsstufe aufweist, entspricht mit hoher Wahrscheinlichkeit dem Zentrum des verdichteten Brustgewebes und ist somit besonders geeignet.

Eine Weiterbildung nach Anspruch 5 schließt die Auswahl einer ungeeigneten Startregion aus, wenn mehrere Startregionen zur Auswahl stehen.

Ein Bestimmen der Kandidatenregionen nach Anspruch 6 ist einfach durchzuführen. Ein Bestimmen der Kandidatenregionen derart, dass die Kandidatenregionen ausgehend von der Startregion monoton abnehmende Quantisierungsstufen aufweisen, nutzt die Eigenschaft, dass die Dichte des verdichteten Brustgewebes ausgehend vom Zentrum nach außen hin abnimmt. Die Kandidatenregionen stellen somit wahrscheinliche Außenkonturen für die Läsion bereit.

Eine Barriere nach Anspruch 7 stellt eine zusätzliche Randbedingung beim Bestimmen der Kandidatenregionen bereit, sodass unsinnige Kandidatenregionen ausgeschlossen werden. Die Barriere wird über eine Benutzerschnittstelle vorgegeben. Die Benutzerschnittstelle stellt eine Interaktionmöglichkeit beim Bestimmen der Kandidatenregionen bereit. Vorzugsweise wird eine Barriere nur vorgegeben, wenn das Verfahren ohne die Vorgabe einer Barriere zumindest eine unsinnige Kandidatenregion bestimmt.

Eine Geschwindigkeitsfunktion nach Anspruch 8 stellt eine geeignete Grundlage zum Bestimmen der Kandidatenregionen bereit.

Eine Auswahl nach Anspruch 9 ermöglicht in einfacher Weise das automatisierte Bereitstellen der nächstkommenden Kandidatenregion. Als Auswahlkriterium kann beispielsweise der lokale Gradient an der jeweiligen Kandidatenregion-Außenkontur, also am Übergang von einer Kandidatenregion zu dem jeweiligen Bildhintergrund, verwendet werden. Als Auswahlkriterien können weiterhin Kriterien verwendet werden, die in bekannten Verfahren zur optimalen Schwellwertbestimmung eingesetzt werden. Die Kriterien zur Schwellwertbestimmung beruhen auf der Verteilung der Quantisierungsstufen (= Histogramm) innerhalb und außerhalb des ausgewählten Bildbereichs. Auf Basis dieser Verteilung wird beispielsweise die Interklassenvarianz maximiert, der Bayes-Fehler minimiert oder ein Entropiemaß maximiert. In Bezug auf Verfahren zur optimalen Schwellwertbestimmung wird auf die Artikel von J. Kittler und J. Illingworth "On Treshold Selection Using Clustering Criteria" (IEEE Transactions System, Man and Cybemetics, 1985, 15(5), 652 - 654) und "Minimum Error Tresholding" (Pattern Recognition, Vol. 19, No. 1, pp. 41 - 47, 1986) sowie die Artikel von N. Otsu "A Treshold Selection Method from Grey Level Histograms" (IEEE Transactions System, Man and Cybemetics, 1979, 9, 62 - 66) und J. N. Kapur et al. "A New Method for Grey Level Picture Tresholding Using the Entropy of Histogram" (Computervision, Graphics and Image Processing, 1985, 29(3), 273 - 285).

Eine Auswahl nach Anspruch 10 ermöglicht eine manuelle Auswahl der nächstkommenden Kandidatenregion. Die Benutzerschnittstelle stellt hierzu eine Interaktionsmöglichkeit bereit. Vorzugsweise wird die manuelle Auswahl zur Korrektur einer unzutreffend automatisch ausgewählten Kandidatenregion durchgeführt.

Der Erfindung liegt ferner die Aufgabe zugrunde, eine Vorrichtung zur Segmentation einer Läsion zu schaffen, die eine zuverlässige und robuste Segmentation ermöglicht.

Diese Aufgabe wird erfindungsgemäß gelöst durch eine Vorrichtung mit den Merkmalen des Anspruchs 11. Die Vorteile der erfindungsgemäßen Vorrichtung entsprechen den Vorteilen des erfindungsgemäßen Verfahrens.

Eine Korrektureinheit nach Anspruch 12 ermöglicht eine Interaktion des Benutzers beim Auswählen der nächstkommenden Kandidatenregion.

Eine Barriereneinheit nach Anspruch 13 ermöglicht das Definieren von Barrieren, die als zusätzliche Randbedingungen beim Bestimmen der Kandidatenregionen zu berücksichtigen sind. Das Bestimmen von unsinnigen Kandidatenregionen aufgrund von optischen Überlagerungen oder einer schlechten Bildqualität wird somit vermieden.

Eine Aufbereitungseinheit nach Anspruch 14 vereinfacht das Bestimmen der Startregion und der Kandidatenregionen.

Ein Assistenzsystem nach Anspruch 15 stellt eine zuverlässige Entscheidungshilfe bereit.

Weitere Merkmale und Vorteile der Erfindung ergeben sich aus der Beschreibung von Ausführungsbeispielen anhand der Zeichnung. Es zeigen:
- Fig. 1: eine schematische Darstellung eines Assistenzsystems mit einer Vorrichtung zur Segmentation einer Läsion gemäß einem ersten Ausführungsbeispiel,
- Fig. 2: eine schematische Darstellung der Vorrichtung in Fig. 1,
- Fig. 3: einen Bildbereich eines Mammographie-Bildes mit einer aufge- nommenen Läsion,
- Fig. 4: der Bildbereich gemäß Fig. 3 nach einer Tiefpassfilterung,
- Fig. 5: der Bildbereich gemäß Fig. 4 nach einer Quantisierungsstufen- Reduktion,
- Fig. 6: der Bildbereich gemäß Fig. 5 mit einer Startregion,
- Fig. 7: der Bildbereich gemäß Fig. 6 mit einer Menge von Kandidaten- regionen,
- Fig. 8: der Bildbereich gemäß Fig. 7 mit einer ausgewählten und aus- brechenden Kandidatenregion,
- Fig. 9: der Bildbereich gemäß Fig. 8 mit einer Barriere,
- Fig. 10: der Bildbereich gemäß Fig. 9 mit einer der Läsion nächstkom- menden Kandidatenregion, und
- Fig. 11: eine schematische Darstellung einer Vorrichtung zur Segmenta- tion einer Läsion gemäß einem zweiten Ausführungsbeispiel.

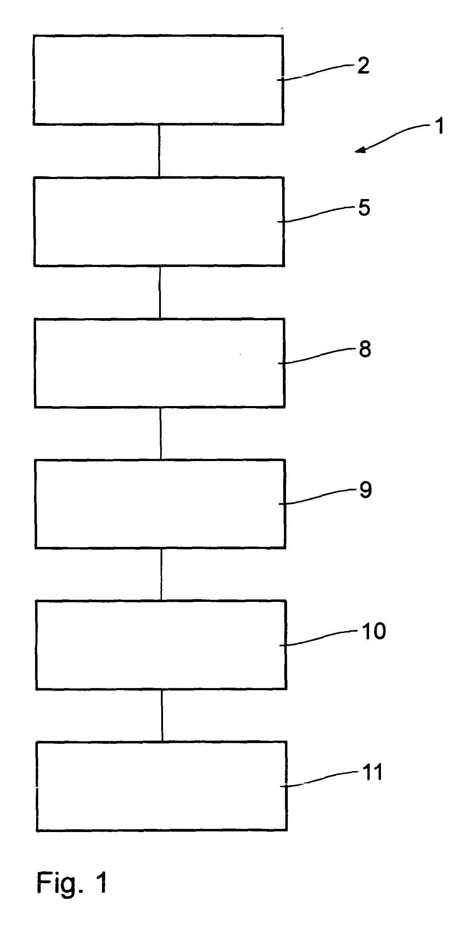

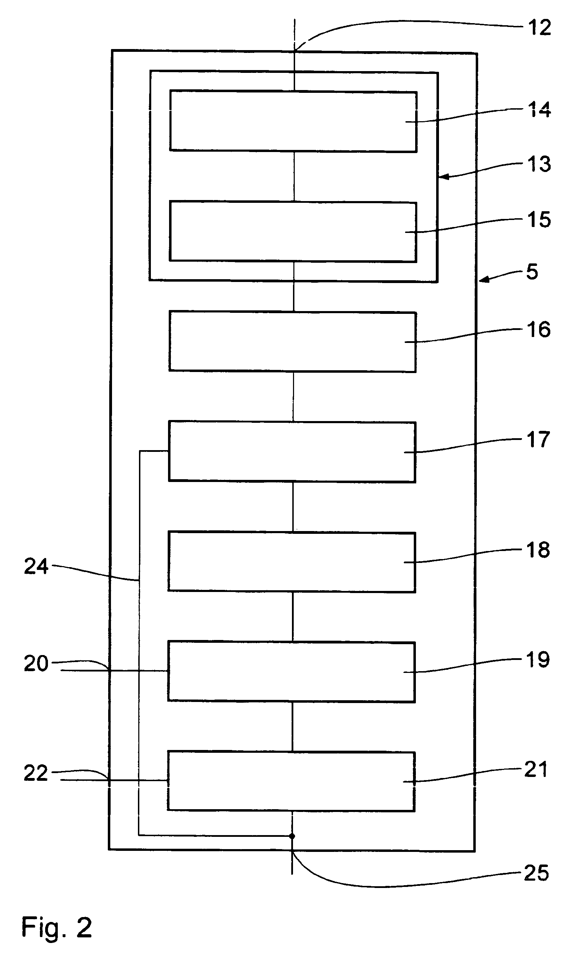

Nachfolgend wird unter Bezugnahme auf die Fig. 1 bis 10 ein erstes Ausführungsbeispiel der Erfindung beschrieben. Ein Assistenzsystem 1 dient zur Erstellung einer Entscheidungshilfe für die Unterscheidung einer gutartigen Brustläsion von einer bösartigen Brustläsion.

Das Assistenzsystem 1 weist eine Auswahlvorrichtung 2 auf. Die Auswahlvorrichtung 2 dient zum Auswählen eines interessierenden Bildbereichs 3, der eine Läsion 4 in Form eines Herdbefundes beinhaltet. Die Läsion wird nachfolgend als Herdbefund 4 bezeichnet. Der Auswahlvorrichtung 2 ist eine Vorrichtung 5 zur Segmentation des Herdbefundes 4 nachgeordnet. Die Vorrichtung wird nachfolgend als Segmentationsvorrichtung 5 bezeichnet. Die Segmentationsvorrichtung 5 dient zum Trennen des Herdbefundes 4 von einem Bildhintergrund 6 des Bildbereichs 3. Die Segmentationsvorrichtuug 5 liefert als Ergebnis der Segmentation einen segmentierten Herdbefund 7, der idealerweise dem tatsächlichen Herdbefund 4 entspricht.

Der Segmentationsvorrichtung 5 ist eine Merkmalsextraktionsvorrichtung 8 nachgeordnet. Diese dient zur Extraktion von Merkmalen zur Charakterisierung des Herdbefundes 4.

Der Merkmalsextraktionsvorrichtung 8 ist eine Merkmalsauswahlvorrichtung 9 nachgeordnet. Diese dient zum Ermitteln einer optimalen Untermenge von Merkmalen für eine zuverlässige Klassifikation des Herdbefundes 4.

Der Merkmalsauswahlvorrichtung 9 ist eine Klassifikationsvorrichtung 10 nachgeordnet. Die Klassifikationsvorrichtung 10 dient zum Klassifizieren des Herdbefundes 4 anhand der optimalen Untermenge von Merkmalen. Die Klassifikationsvorrichtung 10 liefert als Ergebnis eine Klassifikation des Herdbefundes 4 in die Klassen "gutartig" oder "bösartig". Das Klassifikationsergebnis wird über eine nachgeordnete Ausgabevorrichtung 11 einem Benutzer in Form einer Entscheidungshilfe bereitgestellt.

Die Segmentationsvorrichtung 5 weist einen Eingang 12 auf, der mit einer Aufbereitungseinheit 13 verbunden ist. Die Aufbereitungseinheit 13 dient zum Aufbereiten des Bildbereichs 3 und umfasst einen Tiefpassfilter 14 und einen Quantisierungsstufen-Reduzierer 15. Der Tiefpassfilter 14 dient zum Glätten von Quantisierungsstufen Q, die der gepixelte Bildbereich 3 in den einzelnen Pixeln aufweist. Der Quantisierungsstufen-Reduzierer 15 ist dem Tiefpassfilter 14 nachgeordnet. Mittels des Quantisierungsstufen-Reduzierers 15 ist die Anzahl von Quantisierungsstufen Q in dem Bildbereich 3 reduzierbar.

Der Aufbereitungseinheit 13 ist eine Initialisierungseinheit 16 nachgeordnet. Die Initialisierungseinheit 16 dient zum Bestimmen einer Startregion mit einer zugehörigen Startregion-Außenkontur A_{S} für den Herdbefund 4.

Der Initialisierungseinheit 16 ist eine Kandidateneinheit 17 nachgeordnet. Die Kandidateneinheit 17 dient zum Bestimmen einer Menge von Kandidatenregionen mit zugehörigen Kandidatenregion-Außenkonturen A_{K} für den Herdbefund 4. Die einzelnen Kandidatenregionen K werden nachfolgend mit K(i) bezeichnet, wobei i = 1 bis n ist. Mittels der Kandidateneinheit 17 sind die Kandidatenregionen K derart bestimmbar, dass die Kandidatenregion-Außenkonturen A_{K} der Kandidatenregionen K die Startregion-Außenkontur A_{S} einschließen und die Kandidatenregion-Außenkontur A_{K}(i) jeder äußeren Kandidatenregion K(i) die Kandidatenregion-Außenkontur A_{K}(i-1) der zugehörigen inneren Kandidatenregion K(i-1) einschließt.

Der Kandidateneinheit 17 ist eine Auswahleinheit 18 nachgeordnet. Die Auswahleinheit 18 dient zum Auswählen einer dem Herdbefund 4 nächstkommenden Kandidatenregion K_{W} aus der Menge der Kandidatenregionen K, die mit höchster Wahrscheinlichkeit dem Herdbefund 4 entspricht.

Der Auswahleinheit 18 ist eine Korrektureinheit 19 nachgeordnet. Die Korrektureinheit 19 ist mit einer ersten Benutzerschnittstelle 20 verbunden. Die Korrektureinheit 19 dient zum manuellen Auswählen der dem Herdbefund 4 nächstkommenden Kandidatenregion K_{W}, wenn die von der Auswahleinheit 18 ausgewählte Kandidatenregion K_{W} unzutreffend ausgewählt wurde.

Der Korrektureinheit 19 ist eine Barriereneinheit 21 nachgeordnet. Die Barriereneinheit 21 ist mit einer zweiten Benutzerschnittstelle 22 verbunden. Die Barriereneinheit 21 dient zum manuellen Definieren von Barrieren 23 für die Kandidatenregionen K, wenn sich beispielsweise die Kandidatenregion-Außenkontur A_{K} einer der Kandidatenregionen K nicht innerhalb des Bildbereichs 3 schließt. Die Barriereneinheit 21 ist mit der Kandidateneinheit 17 über eine interne Signalverbindung 24 verbunden, sodass nach dem Definieren von Barrieren 23 eine Neubestimmung der Kandidatenregionen K initiierbar ist. Die Barriereeinheit 21 ist ferner mit einem Ausgang 25 der Segmentationsvorrichtung 5 verbunden. An dem Ausgang 25 stellt die Segmentationsvorrichtung 5 die dem Herdbefund 4 nächstkommende Kandidatenregion K_{W} und die zugehörige Kandidatenregion-Außenkontur A_{KW} bereit.

Der Auswahlvorrichtung 2 wird ein digitales Mammographie-Bild der Brust zugeführt. Aus dem digitalen Bild wird mittels der Auswahlvorrichtung 2 der Bildbereich 3 ausgewählt, der den aufgenommenen und interessierenden Herdbefund 4 beinhaltet. Der ausgewählte Bildbereich 3 wird als "Region of Interest" (ROI) bezeichnet und ist rechteckig ausgebildet.

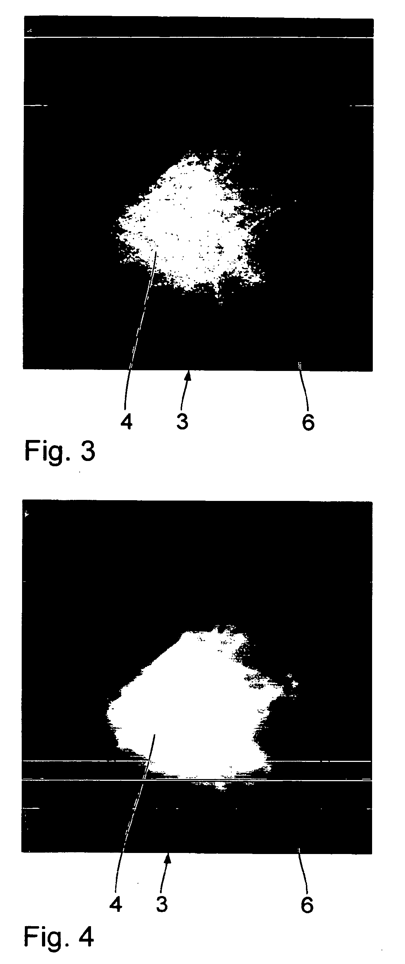

Der ausgewählte Bildbereich 3 wird der Segmentationsvorrichtung 5 zugeführt. In Fig. 3 ist der ausgewählte Bildbereich 3 mit dem aufgenommenen Herdbefund 4 und dem zugehörigen Bildhintergrund 6 dargestellt.

In der Aufbereitungseinheit 13 werden die dem Bildbereich 3 zugehörigen digitalen Bilddaten mittels des Tiefpassfilters 14 aufbereitet. Durch das Tiefpassfilten werden die Quantisierungsstufen Q in den Pixeln des Bildbereichs 3 geglättet. Der Tiefpassfilter 14 ist als kantenerhaltender Tiefpassfilter, wie beispielsweise als anisotroper Diffusionsfilter, als lokaladaptiver Tiefpassfilter oder als Kuwahara-Filter, ausgebildet. Der tiefpassgefilterte Bildbereich 3 ist in Fig. 4 dargestellt.

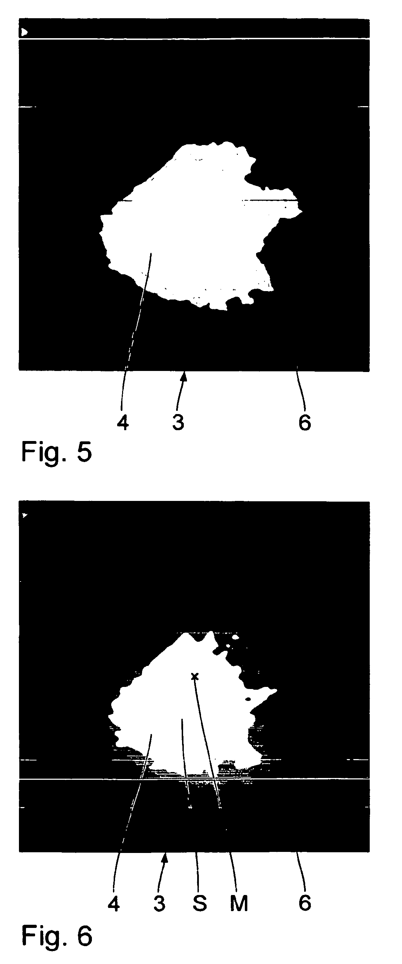

Der tiefpassgefilterte Bildbereich 3 wird anschließend mittels des Quantisierungsstufen-Reduzierers 15 einer Quantisierungsstufen-Reduktion unterzogen. Die dem tiefpassgefilterten Bildbereich 3 zugehörigen digitalen Bilddaten weisen vor der Quantisierungsstufen-Reduktion eine erste Anzahl N₁ von Quantisierungsstufen auf. Diese beträgt beispielsweise 4096 (12 bit). Mittels des Quantisierungsstufen-Reduzierers 15 wird die erste Anzahl N₁ auf eine zweite Anzahl N₂ von Quantisierungsstufen Q reduziert. Die zweite Anzahl N₂ beträgt beispielsweise 255. Die zweite Anzahl N₂ kann konstant gewählt oder dem Bildbereich 3 angepasst werden. Fig. 5 zeigt den Bildbereich 3 nach der Quantisierungsstufen-Reduktion.

Der aufbereitete Bildbereich 3 wird zum Bestimmen der Startregion S der Initialisierungseinheit 16 zugeführt. Das Bestimmen der Startregion S erfolgt in der Initialisierungseinheit 16 anhand folgender Kriterien:
- Die Startregion S muss eine zusammenhängende Region von Pixeln derselben Quantisierungsstufe Q sein.
- Die Startregion S muss eine vordefinierte Mindestgröße flächenmäßig überschreiten. Die Mindestgröße kann beispielsweise 10 % des ausgewählten Bildbereichs 3 sein.
- Der Abstand der Startregion S zu einem Mittelpunkt M des ausgewählten Bildbereichs 3 muss einen vordefinierten Maximalabstand unterschreiten. Der Maximalabstand kann beispielsweise 25 % der Seitenlänge des ausgewählten Bildbereichs 3 sein. Somit muss der Abstand zwischen dem Mittelpunkt M und der Startregion-Außenkontur A_{S} beispielsweise weniger als 25 % der Seitenlänge des ausgewählten Bildbereichs 3 sein.
- Die Startregion S weist die hellste Quantisierungsstufe Q auf.

Die derart bestimmte Startregion S mit der zugehörigen Startregion-Außenkontur A_{S} ist Ausgangspunkt für die nachfolgende Bestimmung der Kandidatenregionen K in der Kandidateneinheit 17. Die bestimmte Startregion S ist in Fig. 6 gezeigt.

Die Kandidateneinheit 17 bestimmt die Kandidatenregionen K nach folgenden Kriterien:
- Die Kandidatenregionen K sind im Wesentlichen konzentrisch zu der Startregion S angeordnet. Das bedeutet, dass die Kandidatenregion-Außenkontur A_{K} jeder Kandidatenregion K die Startregion-Außenkontur A_{S} einschließt und die Kandidatenregion-Außenkontur A_{K}(i) jeder äußeren Kandidatenregion K(i) die Kandidatenregion-Außenkontur A_{K}(i-1) jeder zugehörigen inneren Kandidatenregion K(i-1) einschließt. Somit schneidet die Kandidatenregion-Außenkontur A_{K} jeder Kandidatenregion K die weiteren Kandidatenregion-Außenkonturen A_{K} und die Startregion-Außenkontur A_{S} nicht.
- Die Kandidatenregionen K sind zusammenhängende Regionen von Pixeln jeweils einer Quantisierungsstufe Q.
- Die Kandidatenregionen K weisen ausgehend von der Startregion S monoton abnehmende Quantisierungsstufen Q auf. Das bedeutet, dass die Kandidatenregion K(i-1) eine hellere Quantisierungsstufe Q als die Kandidatenregion K(i) aufweist.

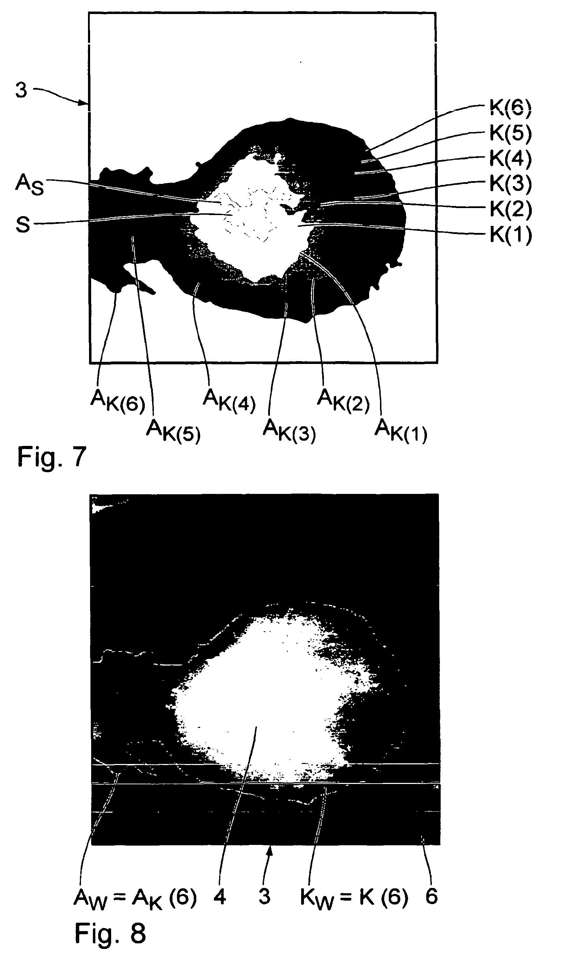

Da es sich bei Herdbefunden 4 um verdichtetes Brustgewebe handelt, dessen Dichte ausgehend von einem Zentrum nach außen hin abnimmt, nutzt die Kandidateneinheit 17 beim Bestimmen der Kandidatenregionen K eine typische Eigenschaft von Herdbefunden 4 aus. Falls beim Bestimmen der Kandidatenregionen K kleinere Regionen einer höheren oder niedrigeren Quantisierungsstufe Q eingeschlossen werden, so werden diese kleineren Regionen durch die Kandidatenregion K geschlossen, sodass diese kompakt ist. Das Bestimmen der Kandidatenregionen K kann beispielsweise mittels eines iterativen Schwellwertverfahrens mit abnehmendem Schwellwert oder durch das schrittweise Erweitern der Startregion S um angrenzende Pixel realisiert werden. Fig. 7 zeigt zusätzlich zu der Startregion S sechs Kandidatenregionen K(1) bis K(6) mit ihren zugehörigen Kandidatenregion-Außenkonturen A_{K}(1) bis A_{K}(6). Wie aus Fig. 7 ersichtlich ist, brechen die Kandidatenregionen K(5) und K(6) aus dem Bildbereich 3 aus. Das bedeutet, dass sich die zugehörigen Kandidatenregion-Außenkonturen A_{K}(5) und A_{K}(6) nicht innerhalb des Bildbereichs 3 schließen.

Die Menge der Kandidatenregionen K wird zur Auswahl der nächstkommenden Kandidatenregion K_{W} der Auswahleinheit 18 zugeführt. Die Auswahleinheit 18 wählt anhand von vordefinierten Auswahlkriterien aus der Menge der Kandidatenregionen K die Kandidatenregion K_{W} aus, die dem Herdbefund 4 am nächsten kommt. Die Auswahl erfolgt automatisch. Als Auswahlkriterium kann beispielsweise der lokale Gradient an den Kandidatenregion-Außenkonturen A_{K} verwendet werden. Alternativ können Auswahlkriterien verwendet werden, die üblicherweise Bestandteil von Ansätzen zur optimalen Schwellwertbestimmung sind. Die Kriterien zur Schwellwertbestimmung beruhen auf der Verteilung der Quantisierungsstufen (= Histogramm) innerhalb und außerhalb des ausgewählten Bildbereichs. Auf Basis dieser Verteilung wird beispielsweise die Interklassenvarianz maximiert, der Bayes-Fehler minimiert oder ein Entropiemaß maximiert. Wie aus Fig. 8 ersichtlich ist, wählt die Auswahleinheit 18 die Kandidatenregion K(6) als die dem Herdbefund 4 nächstkommende Kandidatenregion K_{W} aus.

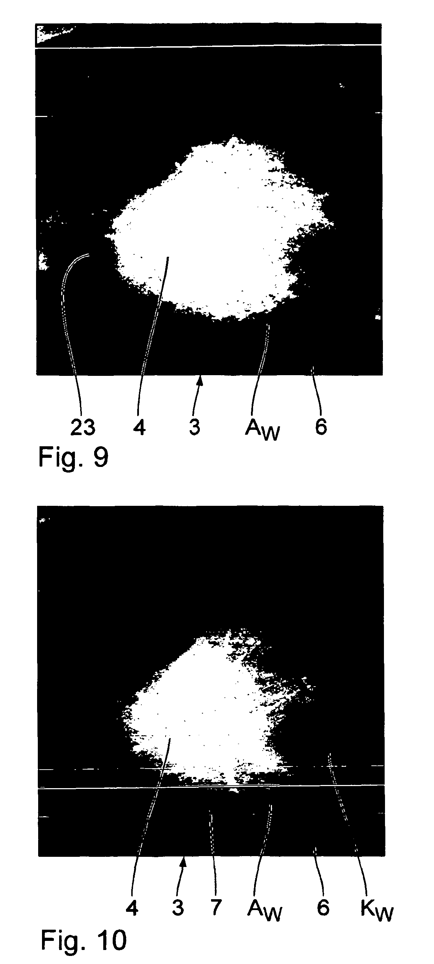

Die ausbrechende Kandidatenregion K(6) wurde aufgrund von optischen Überlagerungen in dem ausgewählten Bildbereich 3 nicht korrekt bestimmt, sodass die ausgewählte Kandidatenregion K_{W} unbrauchbar ist. Mittels der Korrektureinheit 19 kann ein Benutzer über die erste Benutzerschnittstelle 20 die automatische Auswahl der Kandidatenregion K_{W} manuell korrigieren. Darüber hinaus kann ein Benutzer beim Erkennen der ausbrechenden Kandidatenregion K(6) mittels der Barriereneinheit 21 über die zweite Benutzerschnittstelle 22 eine Barriere 23 definieren und das Bestimmen der Kandidatenregionen K erneut initiieren. Fig. 9 zeigt eine definierte Barriere 23, die bei einem nachfolgenden Neubestimmen der Kandidatenregionen K eine zusätzliche Randbedingung darstellt, die das Ausbrechen der Kandidatenregionen K(5) und K(6) verhindert.

Über die interne Signalverbindung 24 wird von der Barriereneinheit 21 die Kandidateneinheit 17 neu gestartet, die die Menge der Kandidatenregionen K unter Berücksichtigung der Barriere 23 neu bestimmt. Die Auswahleinheit 18 wählt anschließend aus den Kandidatenregionen K die dem Herdbefund 4 nächstkommende Kandidatenregion K_{W} neu aus. Diese Auswahl kann von einem Benutzer mittels der Korrektureinheit 19 nochmals korrigiert werden. Sofern die Kandidateneinheit 17 und die Auswahleinheit 18 bereits nach dem erstmaligen Bestimmen der Kandidatenregionen K eine geeignete Kandidatenregion K_{W} bereitstellen, so müssen eine Korrektur der Auswahl und ein Definieren von Barrieren 23 nicht erfolgen. Fig. 10 zeigt die dem Herdbefund 4 nächstkommende Kandidatenregion K_{W} mit der zugehörigen Kandidatenregion-Außenkontur A_{W} unter Berücksichtigung der definierten Barriere 23.

Die Kandidatenregion K_{W} und die zugehörige Kandidatenregion-Außenkontur A_{W} wird anschließend der Merkmalsextraktionsvorrichtung 8 zugeführt. Diese ermittelt auf Basis der Kandidatenregion-Außenkontur A_{W} Formmerkmale sowie weitere Merkmale, wie beispielsweise Texturmerkmale oder die Gewebedichte beschreibende Merkmale, des Herdbefundes 4. Die Merkmale werden anschließend der Merkmalsauswahlvorrichtung 9 zugeführt. Diese bestimmt aus den Merkmalen eine optimale Untermenge von Merkmalen, die der Klassifikationsvorrichtung 10 zugeführt wird. Die Klassifikationsvorrichtung 10 klassifiziert anhand der Untermenge von Merkmalen den Herdbefund 4 in eine der Klassen "gutartig" oder "bösartig". Die Klassifikationsvorrichtung 10 ist beispielsweise als künstliches neuronales Netz oder als Support-Vektor-Maschine ausgebildet. Alternativ kann die Klassifikation mittels fallbasiertem Schließens erfolgen. Das Klassifikationsergebnis wird der Ausgabevorrichtung 11 zugeführt, die aus dem Klassifikationsergebnis eine Entscheidungshilfe für die Unterscheidung des Herdbefundes 4 in die Klassen "gutartig" oder "bösartig" erstellt und ausgibt.

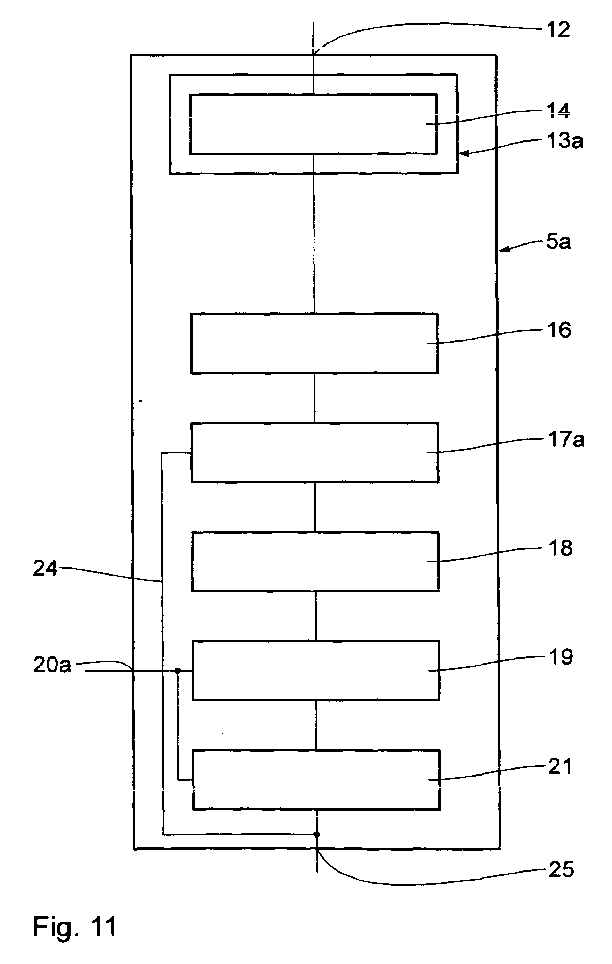

Nachfolgend wird unter Bezugnahme auf Fig. 11 ein zweites Ausführungsbeispiel der Erfindung beschrieben. Konstruktiv identische Teile erhalten dieselben Bezugszeichen wie bei dem ersten Ausführungsbeispiel, auf dessen Beschreibung hiermit verwiesen wird. Konstruktiv unterschiedliche, jedoch funktionell gleichartige Teile erhalten dieselben Bezugszeichen mit einem nachgestellten a. Der wesentliche Unterschied gegenüber dem ersten Ausführungsbeispiel besteht darin, dass in die Kandidateneinheit 17a ein Levelset-Verfahren implementiert ist, mittels dem die Kandidatenregionen K bestimmt werden. Ein Quantisierungsstufen-Reduzierer 15 ist in der Aufbereitungseinheit 13a nicht erforderlich.

Für die Segmentation mittels des Levelset-Verfahrens wird in der Kandidateneinheit 17a anhand von Bildinformationen aus dem Bildbereich 3 und Eigenschaften der Startregion-Außenkontur A_{S} eine Geschwindigkeitsfunktion definiert. Die Geschwindigkeitsfunktion wird definiert, indem ein Energiefunktional mittels Euler-Lagrange minimiert wird. Für die Segmentation des Herdbefundes 4 wird das Energiefunktional anhand des Kehrwertes der Summe der Gradientenstärke entlang der Startregion-Außenkontur A_{S}, der Summe der Intraklassenvarianzen der Quantisierungsstufen Q in den einzelnen Pixeln innerhalb und außerhalb der Startregion-Außenkontur A_{S} und des Bayes-Fehlers, der sich ergibt, wenn die Pixel entsprechend ihrer Quantisierungsstufe Q den Klassen "innerhalb" und "außerhalb" der Startregion-Außenkontur A_{S} zugeordnet werden, gewählt. Die Geschwindigkeitsfunktion definiert die Geschwindigkeit, mit der sich die Punkte der Startregion-Außenkontur A_{S} orthogonal zu dieser nach außen oder innen bewegen. Ist die Geschwindigkeitsfunktion positiv, so wandert die Startregion-Außenkontur A_{S} mit jeder Iteration des Levelset-Verfahrens nach außen. Zu jedem Zeitpunkt liegt somit eine gültige Segmentierung vor und es ergeben sich nach dem Schließen von Löchern konzentrische Regionen, die potentielle Kandidatenregionen K darstellen. Aus den so entstehenden Regionen werden einige Kandidatenregionen K ausgewählt. Das Auswählen der Menge der Kandidatenregionen K erfolgt in Anlehnung an das Verfahren der maximal stabilen Regionen. Um die Menge der maximal stabilen Regionen zu bestimmen, wird jedem Zeitpunkt innerhalh des Levelset-Verfahrens die Größe der zu diesem Zeitpunkt aktuellen Region zugeordnet. Auf diese Weise ergibt sich eine Größenfunktion. Wann immer die erste Ableitung dieser Größenfunktion ein lokales Minimum aufweist, gilt die entsprechende Region als maximal stabil und wird der Menge der Kandidatenregionen K zugeordnet. Eine Glättung der Größenfunktion erhöht die Robustheit bei der Auswahl der Kandidatenregionen K.

Bei dem Levelset-Verfahren wird somit unter Verwendung der Geschwindigkeitsfunktion eine dreidimensionale Hilfsfunktion konstruiert, wobei die Menge der Schnittpunkte der Hilfsfunktion mit einer Ebene in den jeweiligen Höhenlagen die Kandidatenregion-Außenkonturen A_{K} definieren. Als Lösungsalgorithmus für den Levelset-Ansatz kann der Narrow-Band-Algorithmus oder der Fast-Marching-Algorithmus verwendet werden.

Aus den Kandidatenregionen K wird entsprechend dem ersten Ausführungsbeispiel die dem Herdbefund 4 nächstkommende Kandidatenregion K_{W} ausgewählt. Die Schnittstelle 20a ist mit der Korrektureinheit 19 und der Barriereneinheit 21 verbunden, sodass über die Schnittstelle 20a sowohl eine manuelle Auswahl der Kandidatenregion K_{W} als auch ein Definieren von Barrieren 23 möglich ist.

## Patentansprüche

1. Verfahren zur Segmentation einer Läsion, umfassend die Schritte:
- Bereitstellen eines aus einem digitalen Bild ausgewählten Bildbereichs (3) mit einer aufgenommenen Läsion (4),
- Bestimmen einer Startregion (S) für die Läsion (4) in dem Bildbereich (3), wobei die Startregion (S) eine Startregion-Außenkontur (A_{S}) aufweist,
- Bestimmen einer Menge von Kandidatenregionen (K(1) bis K(6)) für die Läsion (4) derart, dass
-- jede Kandidatenregion (K(1) bis K(6)) eine die Startregion-Außenkontur (A_{S}) einschließende Kandidatenregion-Außenkontur (A_{K}(1) bis A_{K}(6)) aufweist,
-- jeweils zwei benachbarte Kandidatenregionen (K(i), K(i-1)) zueinander eine innere Kandidatenregion (K(i-1)) und eine äußere Kandidatenregion (K(i)) bilden,
-- die Kandidatenregion-Außenkontur (A_{K}(i)) jeder äußeren Kandidatenregion (K(i)) die Kandidatenregion-Außenkontur (A_{K}(i-1)) der zugehörigen inneren Kandidatenregion (K(i-1)) einschließt, und
-- die Kandidatenregionen (K(1) bis K(6)) durch ein Levelset-Verfahren bestimmt werden, wobei jedem Zeitpunkt innerhalb des Levelset-Verfahrens die Größe der zu diesem Zeitpunkt aktuellen Region zugeordnet wird, sodass sich eine Größenfunktion ergibt, wobei eine Region der Menge der Kandidatenregionen (K(1) bis K(6)) zugeordnet wird, wenn die erste Ableitung der Größenfunktion ein lokales Minimum aufweist, und
- Auswählen einer der Läsion (4) nächstkommenden Kandidatenregion (K_{W}) aus der Menge der Kandidatenregionen (K(1) bis K(6)).

2. Verfahren nach Anspruch 1, **dadurch gekennzeichnet, dass** der Bildbereich (3) vor dem Bestimmen der Startregion (S) durch Tiefpassfiltern von zugehörigen digitalen Bilddaten aufbereitet wird.

3. Verfahren nach Anspruch 1 oder 2, **dadurch gekennzeichnet, dass** der Bildbereich (3) vor dem Bestimmen der Startregion (S) durch eine Quantisierungsstufen-Reduktion von zugehörigen digitalen Bilddaten aufbereitet wird.

4. Verfahren nach einem der Ansprüche 1 bis 3, **dadurch gekennzeichnet, dass** die Startregion (S) eine zusammenhängende Region von Pixeln einer Quantisierungsstufe (Q) ist, wobei die Startregion (S) eine vordefinierte Mindestgröße überschreitet, und wobei die Startregion (S) die hellste Quantisierungsstufe (Q) aufweist.

5. Verfahren nach einem der Ansprüche 1 bis 4, **dadurch gekennzeichnet, dass** ein Abstand der Startregion (S) zu einem Mittelpunkt (M) des Bildbereiches (3) einen vordefinierten Maximalabstand unterschreitet.

6. Verfahren nach einem der Ansprüche 1 bis 5, **dadurch gekennzeichnet, dass** die Kandidatenregionen (K(1) bis K(6)) zusammenhängende Regionen von Pixeln jeweils einer Quantisierungsstufe (Q) sind, wobei die Kandidatenregionen (K(1) bis K(6)) ausgehend von der Startregion (S) monoton abnehmende Quantisierungsstufen (Q) aufweisen.

7. Verfahren nach einem der Ansprüche 1 bis 6, **dadurch gekennzeichnet, dass** eine über eine Benutzerschnittstelle (22) vordefinierte Barriere (23) zumindest eine der Kandidatenregionen (K(1) bis K(6)) begrenzt.

8. Verfahren nach einem der Ansprüche 1 bis 7, **dadurch gekennzeichnet, dass** anhand von Bildinformationen aus dem Bildbereich (3) und Eigenschaften der Startregion-Außenkontur (A_{S}) eine Geschwindigkeitsfunktion definiert wird, die die Geschwindigkeit, mit der sich die Punkte der Startregion-Außenkontur (A_{S}) orthogonal zu dieser bewegen, beschreibt.

9. Verfahren nach einem der Ansprüche 1 bis 8, **dadurch gekennzeichnet, dass** die Auswahl der der Läsion (4) nächstkonumenden Kandidatenregion (K_{W}) mittel mindestens eines vordefinierten Auswahlkriteriums erfolgt.

10. Verfahren nach einem der Ansprüche 1 bis 9, **dadurch gekennzeichnet, dass** die Auswahl der der Läsion (4) nächstkommenden Kandidatenregion (K_{W}) über eine Benutzerschnittstelle (20) erfolgt.

11. Vorrichtung zur Segmentation einer Läsion mit
- einem Eingang (12) zum Bereitstellen eines aus einem digitalen Bild ausgewählten Bildbereichs (3) mit einer aufgenommenen Läsion (4),
- einer Initialisierungseinheit (16) zum Bestimmen einer Startregion (S) für die Läsion (4) in dem Bildbereich (3), wobei die Startregion (S) eine Startregion-Außenkontur (A_{S}) aufweist,
- einer Kandidateneinheit (17) zum Bestimmen einer Menge von Kandidatenregionen (K(1) bis K(6)) für die Läsion (4), wobei die Kandidatenregionen (K(1) bis K(6)) derart bestimmbar sind, dass
- - jede Kandidatenregion (K(1) bis K(6)) eine die Startregion-Außenkontur (A_{S}) einschließende Kandidatenregion-Außenkontur (A_{K}(1) bis A_{K}(6)) aufweist,
- - jeweils zwei benachbarte Kandidatenregionen (K(i), K(1-1)) zueinander eine innere Kandidatenregion (K(i-1)) und eine äußere Kandidatenregion (K(i)) bilden,
- - die Kandidatenregion-Außenkontur (A_{K}(i)) jeder äußeren Kandidatenregion (K(i)) die Kandidatenregion-Außenkontur (A_{K}(i-1)) der zugehörigen inneren Kandidatenregion (K(i-1)) einschließt, und
- - die Kandidatenregionen (K(1) bis K(6)) durch ein Levelset-Verfahren bestimmt werden, wobei jedem Zeitpunkt innerhalb des Levelset-Verfahrens die Größe der zu diesem Zeitpunkt aktuellen Region zugeordnet wird, sodass sich eine Größenfunktion ergibt, wobei eine Region der Menge der Kandidatenregionen (K(1) bis K(6)) zugeordnet wird, wenn die erste Ableitung der Größenfunktion ein lokales Minimum aufweist, und
- einer Auswahleinheit (18) zum Auswählen einer der Läsion (4) nächstkommenden Kandidatenregion (K_{W}) aus der Menge der Kandidatenregionen (K(1) bis K(6)).

12. Vorrichtung nach Anspruch 11, **dadurch gekennzeichnet, dass** zum Auswählen der der Läsion (4) nächstkommenden Kandidatenregion (K_{W}) eine mit einer Benutzerschnittstelle (20) verbundene Korrektureinheit (19) vorgesehen ist.

13. Vorrichtung nach Anspruch 11 oder 12, **dadurch gekennzeichnet, dass** zum Definieren von Barrieren (23) für die Kandidatenregionen (K(1) bis K(6)) eine mit einer Benutzerschnittstelle (22) verbundene Barriereneinheit (21) vorgesehen ist.

14. Vorrichtung nach einem der Ansprüche 11 bis 13, **dadurch gekennzeichnet, dass** zum Aufbereiten des Bildbereiches (3) eine Aufbereitungseinheit (13) vorgesehen ist.

15. Assistenzsystem zur Erstellung einer Entscheidungshilfe für die Unterscheidung von gutartigen und bösartigen Läsionen, insbesondere von Herdbefunden, mit einer Vorrichtung (5) nach einem der Ansprüche 11 bis 14.

## Claims

1. Method for the segmentation of a lesion, comprising the steps:
- providing an image region (3) selected from a digital image with a recorded lesion (4),
- determining a starting region (S) for the lesion (4) in the image region (3), wherein the starting region (S) has a starting region outer contour (As),
- determining a quantity of candidate regions (K(1) to K(6)) for the lesion (4) in such a way that
-- each candidate region (K(1) to K(6)) has a candidate region outer contour (A_{K}(1) to A_{K}(6)) including the starting region outer contour (A_{S}),
-- two respective adjacent candidate regions (K(i), K(i-1)) form an inner candidate region (K(i-1)) and an outer candidate region (K(i)) with respect to one another, and
-- the candidate region outer contour (A_{K}(i)) of each outer candidate region (K(i)) includes the candidate region outer contour (A_{K}(i-1)) of the associated inner candidate region (K(i-1)), and
-- the candidate regions (K(1) to K(6)) are determined by a level set method, wherein to each instant within the level set method a size of a current region at this instant is allocated, so a size function is produced, a region being allocated to the quantity of candidate regions (K(1) to K(6)) if the first derivation of the size function has a local minimum, and
- selecting a candidate region (K_{W}) closest to the lesion (4) from the quantity of candidate regions (K(1) to K(6)).

2. Method according to claim 1, **characterized in that** the image region (3) is prepared before the determination of the starting region (S) by low-pass filtering of associated digital image data.

3. Method according to claim 1 or 2, **characterized in that** before the determination of the starting region (S), the image region (3) is prepared by a quantization step reduction of associated digital image data.

4. Method according to any one of claims 1 to 3, **characterized in that** the starting region (S) is a connected region of pixels of one quantization step (Q), wherein the starting region (S) exceeds a predefined minimum size, and wherein the starting region (S) has the brightest quantization step (Q).

5. Method according to any one of claims 1 to 4, **characterized in that** a spacing of the starting region (S) from a centre point (M) of the image region (3) falls below a predefined maximum spacing.

6. Method according to any one of claims 1 to 5, **characterized in that** the candidate regions (K(1) to K(6)) are connected regions of pixels of one respective quantization step (Q), wherein the candidate regions (K(1) to K(6)), proceeding from the starting region (S), have monotonically decreasing quantization steps (Q).

7. Method according to any one of claims 1 to 6, **characterized in that** a barrier (23) predefined by a user interface (22) limits at least one of the candidate regions (K(1) to K(6)).

8. Method according to any one of claims 1 to 7, **characterized in that** using image information from the image region (3) and properties of the starting region outer contour (A_{S}) a speed function is defined, which describes a speed with which the points of the starting region outer contour (A_{S}) move orthogonally with respect thereto.

9. Method according to any one of claims 1 to 8, **characterized in that** the selection of the candidate region (K_{W}) closest to the lesion (4) takes place by means of at least one predefined selection criterion.

10. Method according to any one of claims 1 to 9, **characterized in that** the selection of the candidate region (K_{W}) closest to the lesion (4) takes place by means of a user interface (20).

11. Device for the segmentation of a lesion with
- an input (12) for providing an image region (3) selected from a digital image with a recorded lesion (4),
- an initialization unit (16) for determining a starting region (S) for the lesion (4) in the image region (3), the starting region (S) having a starting region outer contour (A_{S}),
- a candidate unit (17) for determining a quantity of candidate regions (K(1) to K(6)) for the lesion (4), wherein the candidate regions (K(1) to K(6)) are determinable in such a way that
-- each candidate region (K(1) to K(6)) has a candidate region outer contour (A_{K}(1) to A_{K}(6)) including the starting region outer contour (As),
-- two respective adjacent candidate regions (K(i), K(i-1)) form an inner candidate region (K(i-1)) and an outer candidate region (K(i)) with respect to one another, and
-- the candidate region outer contour (A_{K}(i)) of each outer candidate region (K(i)) includes the candidate region outer contour (A_{K}(i-1)) of the associated inner candidate region (K(i-1)), and
-- the candidate regions (K(1) to K(6)) are determined by a level set method, wherein to each instant within the level set method a size of a current region at this instant is allocated, so a size function is produced, a region being allocated to the quantity of candidate regions (K(1) to K(6)) if the first derivation of the size function has a local minimum, and
- a selection unit (18) for selecting a candidate region (K_{W}) closest to the lesion (4) from the quantity of candidate regions (K(1) to K(6)).

12. Device according to claim 11, **characterized in that** a correction unit (19) connected to a user interface (20) is provided to select the candidate region (K_{W}) closest to the lesion (4).

13. Device according to claim 11 or 12, **characterized in that** a barrier unit (21) connected to a user interface (22) is provided to define barriers (23) for the candidate regions (K(1) to K(6)).

14. Device according to any one of claims 11 to 1813 **characterized in that** a preparation unit (13) is provided to prepare the image region (3).

15. Assistance system for setting up a decision aid to distinguish between benign and malignant lesions, in particular of focal findings, with a device (5) according to any one of claims 11 to 14.

## Revendications

1. Procédé pour la segmentation d'une lésion comprenant les étapes de :
- préparation d'un domaine d'image (3) avec une lésion (4) enregistrée, choisi à partir d'une image digitale,
- détermination d'une région initiale (S) pour la lésion (4) dans le domaine d'image (3), la région initiale (S) présentant un contour externe de région initiale (A_{S}),
- détermination d'un nombre de régions candidates (K(1) à K(6)) pour la lésion (4) de sorte que
-- chaque région candidate (K(1) à K(6)) présente un contour externe de région candidate (A_{K}(1) à A_{K}(6)) comprenant le contour externe de la région initiale (A_{S}),
-- chaque fois, deux régions candidates voisines (K(i), K(i-1) forment ensemble une région candidate intérieure (K(i-1)) et une région candidate extérieure (K(i)),
-- le contour externe de la région candidate (A_{K}(i)) de chaque région candidate (K(i)) extérieure englobe le contour externe de la région candidate (A_{K}(i-1)) de la région candidate (K(i-1) intérieure correspondante, et
-- les régions candidates (K(1) à K(6)) sont déterminées par un procédé Levelset, où, à chaque instant, à l'intérieur du procédé Levelset, est associée la grandeur de la région actualisée à cet instant, de sorte que l'on obtient une fonction de grandeurs, où une région parmi le nombre des régions candidates (K(1) à K(6)) est associée, lorsque la première section de la fonction de grandeurs présente un minimum local, et
- choix d'une région candidate (Kw) de la lésion (4) parmi le nombre de régions candidates (K(1) à K(6)).

2. Procédé selon la revendication 1, **caractérisé en ce que** le domaine d'image (3) avant la détermination de la région initiale (S) est préparé par un filtrage passe-bas des données images digitales correspondantes.

3. Procédé selon les revendications 1 ou 2 **caractérisé en ce que** le domaine d'image (3) avant la détermination de la région initiale (S) est préparé par une réduction des pas de quantification des données images digitales correspondantes.

4. Procédé selon l'une des revendications de 1 à 3 **caractérisé en ce que** la région initiale (S) est une région correspondant aux pixels d'un pas de quantification (Q), la région initiale (S) dépassant une taille minimale prédéfinie, et la région initiale (S) présentant le pas de quantification (Q) le plus clair.

5. Procédé selon l'une des revendications de 1 à 4 **caractérisé en ce qu'**un espace de la région initiale (S) par rapport à un centre (M) du domaine d'image (3) est inférieur à un espace maximal prédéfini.

6. Procédé selon l'une des revendications de 1 à 5 **caractérisé en ce que** les régions de pixels correspondant aux régions candidates (K(1) à K(6)) sont chaque fois d'un pas de quantification (Q), les régions candidates (K(1) à K(6)) présentant un pas de quantification (Q) diminuant de manière monotone en partant de la région initiale (S).

7. Procédé selon l'une des revendications de 1 à 6 **caractérisé en ce qu'**il délimite au moins l'une des régions candidates (K(1) à K(6)) par une barrière prédéfinie (23) par une interface informatique (22).

8. Procédé selon l'une des revendications de 1 à 7 **caractérisé en ce que** grâce aux informations images à partir du domaine d'image (3) et des propriétés du contour externe de la région initiale (A_{S}) une fonction de vitesse est définie qui décrit la vitesse à laquelle les points du contour externe de la région initiale (A_{S}) se déplacent de manière orthogonale par rapport à celle-ci.

9. Procédé selon l'une des revendications de 1 à 8 **caractérisé en ce que** le choix de la région candidate (Kw) suivante de la lésion (4) s'effectue au moyen d'au moins un critère de sélection prédéfini.

10. Procédé selon l'une des revendications de 1 à 9 **caractérisé en ce que** le choix de la région candidate (Kw) suivante de la lésion (4) s'effectue par une interface informatique (20).

11. Dispositif pour la segmentation d'une lésion avec :
- une entrée (12) pour la préparation d'un domaine d'image (3) avec une lésion (4) enregistré à partir d'une image digitale,
- une unité d'initialisation (16) pour la détermination d'une région initiale (S) pour la lésion (4) dans le domaine d'image (3), la région initiale (S) présentant un contour externe de région initiale (A_{S}),
- une unité candidate (17) pour la détermination d'un nombre de régions candidates (K(1) à K(6)) pour la lésion (4), les régions candidates (K(1) à K(6)) pouvant ainsi être déterminées en sorte que
-- chaque région candidate (K(1) à K(6)) présente un contour externe de région candidate (A_{K}(1) à A_{K}(6) comprenant le contour externe de la région initiale A_{S},
-- chaque fois, deux régions candidates voisines (K(i), K(i-1) forment l'une par rapport à l'autre une région candidate intérieure (K(i-1)) et une région candidate extérieure (K(i)),
-- le contour externe de région candidate (A_{K}(i)) de chaque région candidate extérieure (K(i)) comprend le contour externe de région candidate (A_{K}(i-1)) de la région candidate intérieure (K(i-1)) correspondante, et
-- les régions candidates (K(1) à K(6)) sont déterminées par un procédé Levelset, où à chaque instant du procédé Levelset, la taille de la région en cours à cet instant est associée, de sorte que l'on accède à une fonction de tailles, où une région parmi le nombre de région candidates (K(1) à K(6)) est classée lorsque la première séquence de la fonction de taille présente un minimum local, et
- une unité de sélection (18) pour le choix de la région candidate (Kw) suivante d'une lésion (4) parmi le nombre des régions candidates (K(1) à K(6)).

12. Dispositif selon la revendication 11 **caractérisé en ce que** pour le choix de la région candidate (Kw) suivante de la lésion (4) une unité de correction (19) liée à une interface informatique (20) est prévue.

13. Dispositif selon la revendication 11 ou 12 **caractérisé en ce que** pour la définition de barrières (23) pour les régions candidates (K(1) à K(6)) une unité barrière (21) liée à une interface informatique (22) est prévue.

14. Dispositif selon l'une des revendications de 11 à 13 **caractérisé en ce que** pour la préparation du domaine d'image (3) il est prévu une unité de préparation (13).

15. Système d'assistance pour l'établissement d'une aide décisionnelle pour l'évaluation entre des lésions bénignes et malignes, en particulier de diagnostics médicaux, avec un dispositif (5) selon l'une des revendications de 11 à 14.
